# EUROPÄISCHE PATENTSCHRIFT

(11) **EP 1 614 343 B1**
(45) Veröffentlichungstag und Bekanntmachung des Hinweises auf die Patenterteilung: **19.09.2007**
(21) Anmeldenummer: 05013201.8
(22) Anmeldetag: 18.06.2005
(51) Int. Cl.: A01G 3/025

(54) **Insbesondere als Heckenschere ausgebildete Handschere**
Hand shear, in particular hedge shear
Sécateur à main, en particulier sécateur pour tailler des haies

(30) Priorität: 05.07.2004 DE 102004032464
(43) Veröffentlichungstag der Anmeldung: 11.01.2006
(73) Patentinhaber: Wolf-Geräte AG, 1630 Bulle (CH)
(72) Erfinder: Staudt, Gerhard, 66839 Schmelz (DE)
(74) Vertreter: Koch, Günther

(56) Entgegenhaltungen:
- EP-A- 0 074 578
- DE-U1- 20 216 593
- GB-A- 2 302 665
- US-A- 5 159 757

## Beschreibung

Die Erfindung betrifft eine insbesondere als Heckenschere ausgebildete Handschere nach dem Oberbegriff des Patentanspruchs 1.

Eine derartige Handschere ist in der DE 40 15 021 A1 beschrieben. Diese Schere ermöglicht eine willkürliche Einstellung des Kraftübersetzungsverhältnisses, d.h. es kann die Schneidkraft durch Änderung des Weges geändert werden, über den die Handhebel gegeneinander bewegt werden. Zur Einstellung ist bei dieser bekannten Handschere die Anlenkachse des Koppelarmes mit einem Schieber verbunden, der in dem einen rohrförmigen Handhebel geführt ist und am Ende des Handhebels mit einer Einstellvorrichtung und einer Feststellvorrichtung gekuppelt ist, die am Handhebel ihr Widerlager hat. Hierdurch wird eine bedienungsfreundliche Verstellung der Kraftübersetzung erreicht, weil die Verstellung durchgeführt werden kann, ohne dass die Hände von den Griffen abgenommen werden müssen.

Aufgabe der vorliegenden Erfindung ist es, die Konstruktion zu vereinfachen und eine einfache und sichere Einstellung des Übersetzungsverhältnisses zu gewährleisten.

Gelöst wird die gestellte Aufgabe durch die im Kennzeichnungsteil des Anspruchs 1 angegebenen Merkmale. Ausgestaltungen der Erfindung ergeben sich aus den Unteransprüchen und der folgenden Beschreibung von Ausführungsbeispielen.

Nachstehend werden Ausführungsbeispiele der Erfindung anhand der Zeichnung beschrieben. In der Zeichnung zeigen:
Fig. 1 ist eine Grundrissansicht einer erfindungsgemäß ausgebildeten Heckenschere;
Fig. 2 ist eine Seitenansicht der in Fig. 1 dargestellten Heckenschere;
Fig. 3 ist eine Ansicht der Heckenschere gemäß Fig. 1 und 2 von unten her betrachtet;
Fig. 4 ist ein Schnitt nach der Linie IV-IV gemäß Fig. 1 in größerem Maßstab gezeichnet;
Fig. 5 ist ein Schnitt nach der Linie V-V gemäß Fig. 2 in größerem Maßstab gezeichnet;

Die Fig. 6 bis 9 zeigen ein abgewandeltes Ausführungsbeispiel der Koppelanordnung. Die Ausbildung der Schere entspricht der Anordnung gemäß Fig. 1 bis 3. Im Einzelnen zeigen:

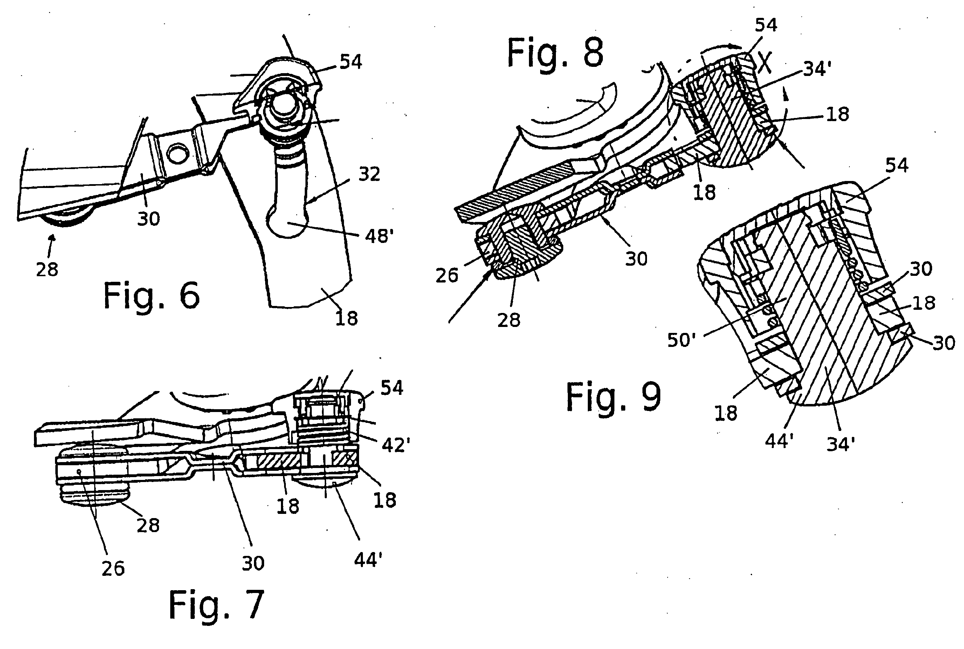

Fig. 6 ist eine Teilansicht des zweiten Ausführungsbeispiels einer erfindungsgemäß ausgebildeten Koppelanordnung;
Fig. 7 ist eine Schnittansicht der in Fig. 6 dargestellten Koppelanordnung;
Fig. 8 ist eine Schnittansicht, die die Koppelanordnung mit Dreharretierbolzenlagerung deutlich macht;
Fig. 9 ist in größerem Maßstab gezeichnet eine Teilschnittansicht des in Fig. 8 mit dem Kreis X umschriebenen Bauteils.

Die in der Zeichnung dargestellte Heckenschere weist ein Obermesser 10 und ein Untermesser 12 auf, die über ein Hauptscherendrehgelenk 14 schwenkbar miteinander verbunden sind. Das Obermesser 10 ist einteilig oder starr mit einem ersten Handhebel 16 verbunden. Der zweite Handhebel 18 ist schwenkbar mit dem Obermesser 10 verbunden. Der zweite Handhebel 18 ist über ein weiteres Drehgelenk 20 an einem seitlichen Fortsatz des Obermessers 10 angelenkt.

Die Handhebel sind mit Griffen 22 ausgerüstet und tragen Puffer 24, die in der Schließstellung der Messer einander berühren.

Das Untermesser 12 weist einen über das Drehgelenk 14 zurückspringenden Fortsatz 26 auf, an dessen Ende über einen Nietbolzen 28 ein Koppelarm 30 angelenkt ist, der an seinem Ende einen die Anlenkachse am zweiten Handhebel bildenden Verriegelungsbolzen 34 trägt, der in einen Langlochschlitz 32 des zweiten Handhebels 18 einsteht und in diesem verschiebbar und in verschiedenen Stellungen fixierbar ist, um das Kraftübersetzungsverhältnis der Heckenschere zu verändern, indem der Schließweg der Handhebel verändert wird und somit der Kraftaufwand eingestellt werden kann.

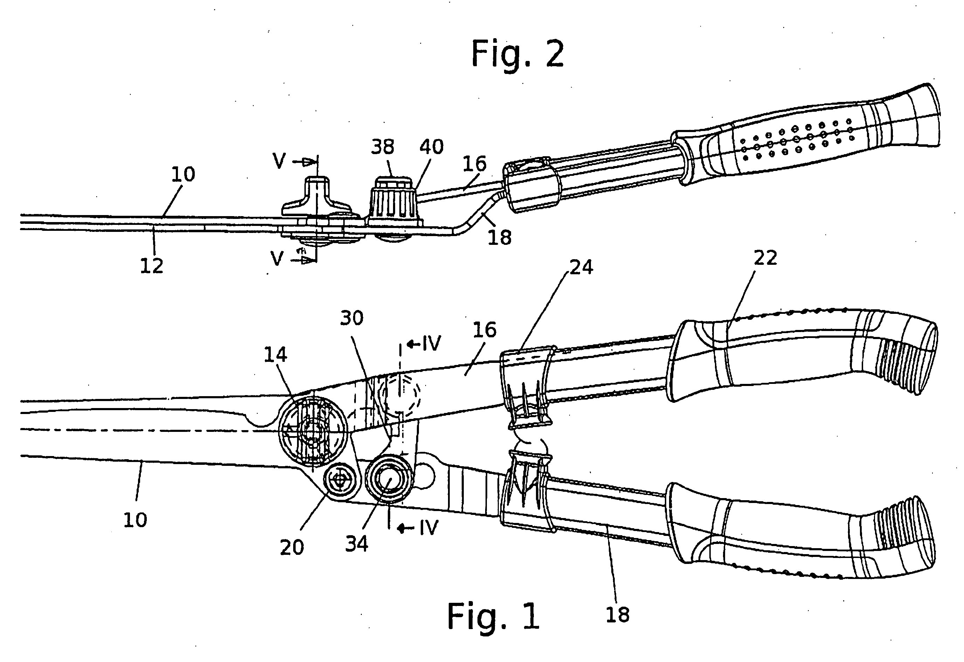

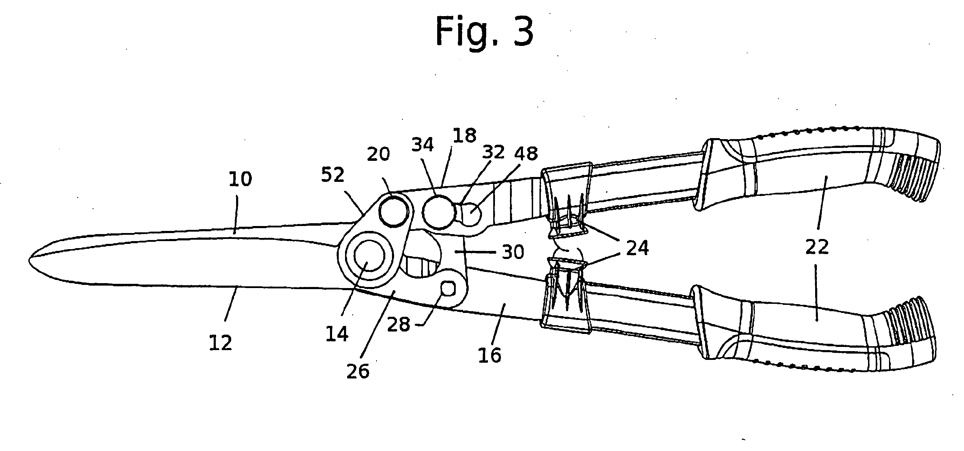

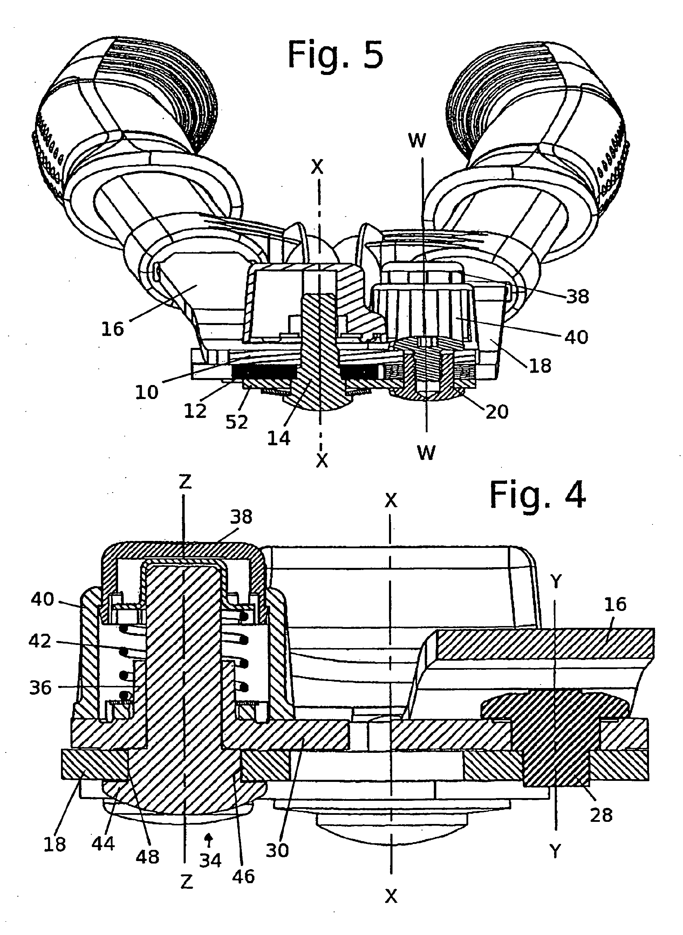

Gemäß dem Ausführungsbeispiel nach Fig. 1 bis 5 ist der Verriegelungsbolzen 34 in einem senkrecht vorstehenden Hülsenfortsatz 36 des Koppelarmes 30 axial verschieblich gelagert. Betätigbar ist der Verriegelungsbolzen 34 durch einen Druckknopf 38, der gegenüber einem Druckknopfgehäuse 40 gegen die Kraft einer Druckschraubenfeder 42 verschiebbar ist. In der in Fig. 4 dargestellten Ruhestellung wird der Druckknopf durch seitliche Rastvorsprünge im Gehäuse gehalten.

Der Verriegelungsbolzen 34 weist einen Kopf 44 auf, der durch die Feder 42 gegen die Schlitzränder des zweiten Handhebels 18 gezogen wird. An den Kopf 44 schließt sich ein Bundabschnitt 46 an, dessen axiale Höhe der Dicke des zweiten Handhebels 18 entspricht. Die radiale Abmessung des Bundabschnitts 46 ist größer als die Breite des Langlochschlitzes 32. Dieser Langlochschlitz weist an seinen Enden und gegebenenfalls auch im Mittelabschnitt Aussparungen 48 auf, deren Querschnittsabmessung größer ist als die Schlitzbreite. Das Querschnittsprofil des Bundabschnitts 46 entspricht dem Querschnittsprofil der Aussparungen 48 und der Schaftabschnitt 50 des Verriegelungsbolzens 34 entspricht der Schlitzbreite. Dadurch wird es möglich, durch axiales Niederdrücken des Druckknopfes 38 den Bundabschnitt 46 des Verriegelungsbolzens 34 aus der jeweiligen Aussparung 48 auszuheben, so dass der Verriegelungsbolzen 34 mit seinem Schaftabschnitt 50 im Schlitz 32 verschoben werden kann und dabei den Koppelarm 30 in eine andere Übersetzungsstellung überführt. In der jeweils eingestellten Übersetzungsstellung rastet nach Loslassen des Druckknopfes 38 der Bundabschnitt 46 des Verriegelungsbolzens 34 in die entsprechende Aussparung 48 ein, so dass der Koppelarm 30 mit seiner Anlenkachse am zweiten Handhebel 18 fixiert wird. Der Bundabschnitt 46 und die Aussparungen 48 können kreisrund oder polygonal einander entsprechend ausgebildet sein.

In den Figuren ist die Achse des Hauptscherendrehgelenks 14 mit X-X gekennzeichnet. Die Achse Y-Y ist die Anlenkachse des Koppelarmes 30 am Untermesser 12 und die Achse Z-Z ist die Achse des Druckknopfes 38 bzw. des Verriegelungsbolzens 34. Mit W-W ist die Anlenkachse des weiteren Drehgelenks bezeichnet. Mit dem Bezugszeichen 52 ist eine Decklasche bezeichnet, die auf der Unterseite das Drehgelenk 20 mit dem Hauptscherendrehgelenk 14 verbindet, so dass auch bei hoher Beanspruchung die beiden Gelenke nicht gegeneinander verkippt werden können, sondern ständig parallel zueinander verbleiben. Eine derartige Decklasche zeigt die EP 525 569 B1.

Das Ausführungsbeispiel nach Fig. 6 bis 9 unterscheidet sich weiter von dem Ausführungsbeispiel nach Fig. 1 bis 5 durch die Art der Verriegelungseinrichtung des Koppelarmes. Der Aufbau der Schere selbst entspricht der Darstellung gemäß Fig. 1 bis 3, deren Einzelheiten hier nicht nochmals dargestellt sind. Auch bei diesem Ausführungsbeispiel ist an einem Fortsatz 26 des Untermessers 12 ein Koppelarm 30 angelenkt, der als doppelte Blechkoppel ausgebildet ist und sowohl den Fortsatz 26 als auch den zweiten Handhebel 18 beidseitig erfasst. Der Koppelarm 30 ist am Untermesserfortsatz 26 über einen Bolzen 28 angelenkt und trägt an seinem freien Ende als Anlenkachse einen Verriegelungsbolzen 34', der zusammen mit seinem Drehknopf 54 durch eine Druckschenkelfeder 42' in die Verriegelungsstellung gemäß Fig. 8 und 9 zurückgedreht wird, wenn der Drehknopf 54 losgelassen wird. Diese Druckschenkelfeder 42' übt außer der Torsionskraft für die Rückstellung noch eine axial gerichtete Kraft aus, die einen Spielausgleich bewirkt. Der Drehknopf 54 besitzt eine ergonometrisch günstige Griffoberfläche. Der Durchmesser des Schaftes 50' entspricht dem Durchmesser der kreisförmigen Aussparungen 48' des zweiten Hebelarms 18, und dieser Schaft 50' ist auf zwei gegenüberliegenden Seiten derart abgeflacht, dass er in einer um 90° verdrehten Stellung im Schlitz 32 entlang gleiten kann. Auf diese Weise wird wiederum eine einfache Verstellung der Koppel 30 und eine Verriegelung in der jeweils eingestellten Stellung möglich.

### Bezugszeichenliste

- 10: Obermesser
- 12: Untermesser
- 14: Hauptscherendrehgelenk
- 16: erster Handhebel
- 18: zweiter Handhebel
- 20: Drehgelenk
- 22: Griffe
- 24: Puffer
- 26: Fortsatz
- 28: Nietbolzen
- 30: Koppelarm
- 32: Langlochschlitz
- 34: Verriegelungsbolzen
- 34': Verriegelungsbolzen
- 36: Hülsenfortsatz
- 38: Druckknopf
- 40: Druckknopfgehäuse
- 42: Druckschraubenfeder
- 42': Druckschenkelfeder
- 44: Kopf
- 44': Kopf
- 46: Bundabschnitt
- 48: Aussparungen
- 48': Aussparungen
- 50: Schaftabschnitt
- 50': Schaft
- 52: Decklasche
- 54: Drehknopf

## Patentansprüche

1. Insbesondere als Heckenschere ausgebildete Handschere
- mit zwei durch Handhebel (16 und 18) um ein Hauptscherendrehgelenk (14) verschwenkbaren Messern (10 und 12),
- bei welcher die Handhebel (16 und 18) durch ein zweites zum Hauptscherendrehgelenk (14) parallel versetztes Drehgelenk (20) unabhängig von den Messern (10 und 12) miteinander in unmittelbarer Verbindung stehen
- und bei welcher eines (10) der Messer (10 und 12) starr mit dem einen (16) der beiden Handhebel (16 und 18) in Verbindung steht,
- während das andere (12) der Messer (10 und 12) einen über das Hauptscherendrehgelenk (14) auskragenden Fortsatz (26) aufweist,
- an dem eine Koppel (30) mit einem Ende angelenkt (28) ist,
- die wiederum über ihr anderes Ende mit einem Verriegelungsbolzen (34) am zweiten Handhebel (18) angelenkt ist,
- wobei die beiden Handhebel (16 und 18) und die beiden Messer (10 und 12) miteinander ein Viergelenk-System bilden
- und bei dem der Verriegelungsbolzen (34) der Koppel (30) in eine Schlitzführung (32) am zweiten Handhebel (18) eingreift und zur Veränderung des Kraftübersetzungsverhältnisses längs dieser Schlitzführung (32) verstellbar abgestützt ist,
**dadurch gekennzeichnet, dass** die Schlitzführung (32) wenigstens zwei gegenüber der Schlitzbreite erweiterte Aussparungen (48) aufweist, dass der Verriegelungsbolzen (34) in jeder Aussparung (48) formschlüssig festlegbar ist und dass der Formschluss durch axiale Verschiebung oder/und Drehung des Verriegelungsbolzens (34) auslösbar ist, um eine Verschiebung des Verriegelungsbolzens (34) in der Schlitzführung (32) zu ermöglichen.

2. Handschere nach Anspruch 1,
**dadurch gekennzeichnet, dass** der Verriegelungsbolzen (34) einen Bundabschnitt (46) mit einem Querschnittsprofil aufweist, das dem Querschnittsprofil der Aussparungen (48) entspricht und dass der Verriegelungsbolzen (34) weiter einen Schaftabschnitt (50) aufweist, dessen Durchmesser der Schlitzbreite entspricht.

3. Handschere nach Anspruch 2,
**dadurch gekennzeichnet, dass** der Verriegelungsbolzen (34) axial durch eine Feder (42) in die Verriegelungsstellung vorgespannt und durch Betätigung eines Druckknopfes (38) axial ausrückbar ist, um den Bundabschnitt (46) aus der Aussparung (48) zu heben.

4. Handschere nach den Ansprüchen 2 und 3,
**dadurch gekennzeichnet, dass** das Querschnittsprofil der Aussparungen (48) und des Bundabschnitts (46) des Verriegelungsbolzens (34) kreisrund oder polygonal ausgebildet ist.

5. Handschere nach Anspruch 1,
**dadurch gekennzeichnet, dass** der Verriegelungsbolzen (34') zwei seitliche gegenüberliegende Abflachungen aufweist, deren gegenseitiger Abstand der Schlitzbreite entspricht.

6. Handschere nach Anspruch 5,
**dadurch gekennzeichnet, dass** der Verriegelungsbolzen (34') mit drehfest verbundenem Drehknopf (54) durch eine Druckschenkelfeder (42') in die Verriegelungsstellung vorgespannt ist.

7. Handschere nach einem der Ansprüche 1 bis 6,
**dadurch gekennzeichnet, dass** der Verriegelungsbolzen (34) als Anschlag einen erweiterten Kopfteil (44) aufweist.

8. Handschere nach Anspruch 1,
**dadurch gekennzeichnet, dass** die Drehgelenke (14 und 20) über eine Decklasche (52) verbunden sind.

9. Handschere nach einem der Ansprüche 1 bis 8,
**dadurch gekennzeichnet, dass** der Koppelarm (30) als doppelte Blechkoppel (Fig. 6 - 9) ausgebildet ist.

10. Handschere nach einem der Ansprüche 1 bis 9,
**dadurch gekennzeichnet, dass** die Handhebel (16 und 18) in Aluminiumgriffrohren festgelegt sind, die Handgriffe (22) tragen und dass die Griffrohre mit Puffern (24) versehen sind.

## Claims

1. Hand shears, in particular formed as hedge shears
- with two blades (10 and 12) which can be pivoted by hand levers (16 and 18) around a main shears rotational joint (14),
- in which the hand levers (16 and 18) are directly connected to one another by a second rotational joint (20) which is offset parallel to the main shears rotational joint (14), independently of the blades (10 and 12),
- and in which one (10) of the blades (10 and 12) is rigidly connected to the one (16) of the two hand levers (16 and 18),
- while the other (12) of the blades (10 and 12) has a projection (26) protruding beyond the main shears rotational joint (14),
- on which a connecting rod (30) is coupled (28) with one end,
- which is turn is coupled via its other end with a locking bolt (34) on the second hand lever (18),
- wherein the two hand levers (16 and 18) and the two blades (10 and 12) together form a four-joint system,
- and in which the locking bolt (34) of the connecting rod (30) engages in a slotted guide (32) on the second hand lever (18) and is adjustably supported to change the force transmission ratio along this slotted guide (32),
**characterised in that** the slotted guide (32) has at least two recesses (48) expanded relative to the slot width, that the locking bolt (34) can be fixed in each recess (48) in a positive locking manner and the positive locking can be released by axial displacement and/or rotation of the locking bolt (34) in order to enable a displacement of the locking bolt (34) in the slotted guide (32) to take place.

2. Hand shears according to Claim 1,
**characterised in that** the locking bolt (34) has a collar section (46) with a cross-section profile which corresponds to the cross-section profile of the recesses (48) and that the locking bolt (34) also has a shaft section (50) whose diameter corresponds to the slot width.

3. Hand shears according to Claim 2,
**characterised in that** the locking bolt (34) is axially pretensioned by a spring (42) into the locking position and can be axially disengaged by actuating a button (38) in order to lift the collar section (46) out of the recess (48).

4. Hand shears according to Claims 2 and 3,
**characterised in that** the cross-section profile of the recesses (48) and of the collar section (46) of the locking bolt (34) is circular or polygonal.

5. Hand shears according to Claim 1,
**characterised in that** the locking bolt (34') has two lateral opposite flat sections whose mutual distance corresponds to the slot width.

6. Hand shears according to Claim 5,
**characterised in that** the locking bolt (34') is pretensioned with a rotary knob (54) connected in a rotationally fixed manner by a pressure spiral spring (42') into the locking position.

7. Hand shears according to one of Claims 1 to 6,
**characterised in that** the locking bolt (34) has an expanded head element (44) as a stop.

8. Hand shears according to Claim 1,
**characterised in that** the rotary joints (14 and 20) are connected via a cover plate (52).

9. Hand shears according to one of Claims 1 to 8,
**characterised in that** the connecting rod arm (30) is formed as a doubled sheet-metal connecting rod (Fig. 6-9).

10. Hand shears according to one of Claims 1 to 9,
**characterised in that** the hand levers (16 and 18) are fixed in aluminium handle tubes which bear hand grips (22) and that the handle tubes are provided with buffers (24).

## Revendications

1. Cisaille réalisée notamment en tant que cisaille à haies,
- comprenant deux lames (10 et 12) pouvant pivoter autour d'une articulation tournante principale de cisaille (14) à l'aide de leviers à main (16 et 18),
- dont les leviers à main (16 et 18) sont directement reliés entre eux, indépendamment des lames (10 et 12), par une seconde articulation tournante (20) parallèle à l'articulation tournante principale de cisaille (14),
- et dont l'une (10) des lames (10 et 12) est reliée fixement à l'un (16) des deux leviers à main (16 et 18),
- tandis que l'autre (12) des lames (10 et 12) présente un prolongement (26) faisant saillie de l'articulation tournante principale de cisaille (14),
- auquel est reliée de manière articulée (28) une extrémité d'une bielle (30)
- dont l'autre extrémité est reliée de manière articulée à un boulon de verrouillage (34) situé sur le second levier à main (18),
- les deux leviers à main (16 et 18) et les deux lames (10 et 12) formant ensemble un quadrilatère articulé
- et dans le cas duquel le boulon de verrouillage (34) de la bielle (30) est en prise dans un guide à fente (32) du second levier à main (18) et, pour modifier le rapport de transmission de force, prend appui de manière déplaçable le long de ce guide à fente (32),
**caractérisée en ce que** le guide à fente (32) présente au moins deux évidements (48) élargis par rapport à la largeur de la fente, **en ce que** le boulon de verrouillage (34) peut être immobilisé par engagement positif dans chaque évidement (48), et **en ce que** l'engagement positif peut être supprimé en déplaçant axialement ou/et en tournant le boulon de verrouillage (34), afin de permettre un déplacement du boulon de verrouillage (34) dans le guide à fente (32).

2. Cisaille selon la revendication 1, **caractérisée en ce que** le boulon de verrouillage (34) présente un épaulement (46) avec un profil de section transversale correspondant au profil de section transversale des évidements (48), et **en ce que** le boulon de verrouillage (34) présente en outre une section de tige (50) dont le diamètre correspond à la largeur de la fente.

3. Cisaille selon la revendication 2, **caractérisée en ce que** le boulon de verrouillage (34) est précontraint axialement en position de verrouillage par un ressort (42) et peut être déclenché axialement en actionnant un bouton poussoir (38) pour faire sortir l'épaulement (46) de l'évidement (48).

4. Cisaille selon les revendications 2 et 3, **caractérisée en ce que** le profil de section transversale des évidements (48) et de l'épaulement (46) du boulon de verrouillage (34) est de forme circulaire ou polygonale.

5. Cisaille selon la revendication 1, **caractérisée en ce que** le boulon de verrouillage (34') présente deux aplatissements latéraux se faisant face, dont l'écartement réciproque correspond à la largeur de la fente.

6. Cisaille selon la revendication 5, **caractérisée en ce que** le boulon de verrouillage (34') à bouton tournant (54) solidaire en rotation de ce dernier est précontraint en position de verrouillage par un ressort spiral de pression (42').

7. Cisaille selon l'une des revendications 1 à 6, **caractérisée en ce que** le boulon de verrouillage (34) présente en tant que butée une partie de tête élargie (44).

8. Cisaille selon la revendication 1, **caractérisée en ce que** les articulations tournantes (14 et 20) sont reliées par une éclisse (52).

9. Cisaille selon l'une des revendications 1 à 8, **caractérisée en ce que** le bras de bielle (30) est réalisée en tant que bielle en tôle double (fig. 6-9).

10. Cisaille selon l'une des revendications 1 à 9, **caractérisée en ce que** les leviers à main (16 et 18) sont fixés dans des bras tubulaires en aluminium portant des poignées (22), et **en ce que** les bras tubulaires sont dotés de butées-amortisseurs (24).
